## Europäisches Patentamt

## European Patent Office

## Office européen des brevets

(19)

(11) Veröffentlichungsnummer: **0 079 104**
**B1**

(12)

# EUROPÄISCHE PATENTSCHRIFT

(45) Veröffentlichungstag der Patentschrift:
23.07.86

(51) Int. Cl.⁴: **B 29 C 47/88,** B 29 D 23/00

(21) Anmeldenummer: **82201383.5**

(22) Anmeldetag: **05.11.82**

(54) **Verfahren zum Extrudieren eines Kunststoffhohlprofils.**

(30) Priorität: **07.11.81 NL 8105045**

(43) Veröffentlichungstag der Anmeldung:
**18.05.83 Patentblatt 83/20**

(45) Bekanntmachung des Hinweises auf die Patenterteilung:
**23.07.86 Patentblatt 86/30**

(84) Benannte Vertragsstaaten:
**AT DE FR GB IT NL SE**

(56) Entgegenhaltungen:
**DE-A-2 455 779**
**US-A-3 212 135**
**US-A-3 990 828**

(73) Patentinhaber: **STAMICARBON B.V., Mijnweg 1,
NL- 6167 AC Geleen (NL)**

(72) Erfinder: **Dunning, Leslie Granthem William,
Tuulshoek 38, NL- 6093 CR Heythuysen (NL)**

(74) Vertreter: **Hatzmann, Marinus Jan,
OCTROOIBUREAU DSM P.O.Box 9, NL- 6160 MA
Geleen (NL)**

EP 0 079 104 B1

## Beschreibung

Die Erfindung betrifft ein Verfahren zum Extrudieren von Kunststoffhohlprofilen nach dem Gattungsbegriff des Anspruchs 1. Ein solches Verfahren ist aus DE-A-2455779 bekannt. Vom Extrudat werden immer gewünschte Längen abgeschnitten.

Aus der DE-B- 12 85 721 ist bekannt, Kunststoffhohlprofile dadurch herzustellen, dass ein geschmolzenes Kunststoffmaterial durch einen in sich geschlossenen Extrusionsschlitz gepresst und das so geformte hohle Extrudat danach abgekühlt wird. Der Extrusionsschlitz wird durch das Vorhandensein eines Dorns im Extrusionsmundstück gebildet, das zwischen der Innenwand des Extruderkopfes und der Aussenwand des Dorns eine in sich geschlossene schlitzförmige Öffnung freilässt. Durch Anpassungen der Formgebung der Innenwand des Extruderkopfes und der Aussenwand des Dorns können für den Zweck geeignete Querschnitte des Extrusionsschlitzes erzielt werden.

Geeignete Kunststoffe zum Extrudieren von Hohlprofilen sind u.a. Polyvinylchlorid (PVC) ein Pfropfkopolymer aus Styrol und Acrylnitril auf einem Butadiengummi (ABS) oder Gemische davon, Polyäthylen, Polypropylen-Kopolymere und Mischungen hiervon, Pfropfkopolymer aus Styrol und Acrylnitril auf einem Akrylatgummi (AAS) und schlagfest modifiziertes PVC.

Gewöhnlich wird das aus der Extrusionsplatte austretende Extrudat, das sich noch in weichem, plastischem Zustand befindet und daher leicht verformbar ist, durch eine Kalibriervorrichtung geführt. Diese Kalibriervorrichtung dient zur Unterstützung und oft auch zur weiteren Massgebung der Profilform während der Anfangsphase des Abkühlungsprozesses. Nach Verlassen der Kalibriervorrichtung ist das Kunststoffmaterial so weit abgekühlt, dass eine weitere Abkühlung ohne zusätzliche Massnahmen zur Bewahrung der Form erfolgen kann.

Als Kalibriervorrichtung kann die aus der US-A-3,169,272 bekannte Hohlbüchse verwendet werden, deren Wände gekühlt werden. Maßnahmen werden getroffen, um die Wand des Profils gegen die Innenwand der Kalibrierbüchse zu drücken. Dies erfolgt durch das Anlegen eines Druckunterschiedes zwischen der Innen- und Aussenwand des Profils im Bereich der Kalibrierbüchse.

Eine für das Anlegen eines derartigen Druckunterschiedes viel verwendete Methode besteht darin, über kleine Öffnungen in der Wand der Kalibrierbüchse ein Vakuum zwischen die Aussenwand des Profils und die Innenwand der Kalibrierbüchse zu saugen.

Ein Nachteil der bekannten Verfahren zum Extrudieren von Hohlprofilen ist, dass aus dem Extrudat über die Innenwand des Profils in den Profilhohlraum tretende Stoffe je nach ihrer Art entweder frei in den Arbeitsraum entweichen oder sich auf der Innenwand des Profils festsetzen können. Im ersteren Fall beeinträchtigen diese Stoffe das Arbeitsmilieu, im letzteren Fall können diese Stoffe einen agressiven Einfluss auf die Innenwand des Profils ausüben. Es handelt sich hierbei um Stoffe wie nichtumgesetzte Monomere, Nebenprodukte der Polymerisation, Zuschlagstoffe, Katalysatorenreste und ihre Abspaltprodukte.

Ein weiterer Nachteil der bekannten Verfahren ist, dass die Abkühlung des Extrudats in der Kalibrierbüchse und auch danach praktisch ganz von der Aussenwand des Profils ausgehend stattfindet. Diese ungleichmässige Kühlung von Aussen- und Innenwand verursacht aber im fertigen Produkt Schrumpfspannungen, die die Qualität des Produkts nachteilig beeinflussen. Je grösser die Wandstärke ist, desto grösser ist dieser Nachteil.

Als Nachteil bei den bekannten Verfahren wird auch empfunden, dass die Temperatur des Dorns im Extrudermundstück zu hoch ansteigt. Vor allem bei kommerziellen Anlagen ist diese Tatsache oft ein produktionshemmender Faktor.

Die Erfindung bezweckt, ein Verfahren zum Extrudieren eines Hohlprofils zu schaffen, wobei die geschilderten Nachteile nicht oder in viel geringerem Masse auftreten und das durch einige einfache Massnahmen bei bestehenden Extrusionsprozessen angewandt werden kann. Ausserdem bietet die Erfindung noch einen unerwarteten und überraschenden Vorteil durch die Verminderung unerwünschter Ablagerungen am Dorn während des Extrudierens von Kunststoffen, wobei diese Erscheinung auftritt.

Das wird dadurch erreicht, dass während des Extrudierens im ganzen Profilhohlraum des nicht abgeschnittenen Teils des extrudierten Profils ein Gasstrom aufrechterhalten wird, wobei Gas über das freie Ende des Profils eingelassen wird.

Nach dem erfindungsgemässen Verfahren kann eine Innenkühlung über die gesamte Länge des noch nicht abgeschnittenen Teils des extrudierten Profils erfolgen. Ausserdem werden gas- und dampfförmige Stoffe, die aus dem Extrudat über die Innenwand des Profils in den Profilhohlraum treten, fortlaufend mit dem Gasstrom abgeführt. Durch die Absaugung des Gases durch einen oder mehrere Kanäle im Dorn wird durch das Gas eine Kühlwirkung auf den Dorn ausgeübt.

Als Gasstrom sollte vorzugsweise ein Luftstrom gewählt werden. Vorzugsweise wird der Gasstrom durch Absaugung über den Kanal oder die Kanäle im Dorn aufrechterhalten, wobei das Gas über das freie Ende des Profils zugeführt wird. Falls Luft als Gas verwendet wird erfordert diese Methode keine speziellen Vorkehrungen am freien Ende des Profils und ist daher sehr vorteilhaft, da dergleichen Vorkehrungen wegen des manchmal nicht-stationären Charakters des freien Endes ziemlich kompliziert sein müssten. Wenn jedoch der nicht abgeschnittene Teil des Profils zu lang wird, um mit Vakuumsaugen einen genügend grossen Gasstrom aufrechtzuerhalten, wird vorzugsweise durch Einpressen von Gas am freien Ende des Profils der Gasstrom aufrechterhalten.

Lange, nichtabgeschnittene Teile des extrudierten Profils ergeben sich, wenn ein flexibles Hohlprofil auf eine Haspel gewickelt wird. Um dabei einen Gasanschluss am freien Ende zu erreichen, kann dieses freie Ende zu Beginn des Aufwickelprozesses durch eine hohle Achse der Haspel axial nach aussen gebracht werden, so dass eine drehbare Abdichtung dort angebracht werden kann.

Die Temperatur des in das Hohlprofil eintretenden Gases wird abhängig von der Art des Extrudats und der aus dem Extrudat austretenden Stoffe gewählt. Manchmal wird ein Kompromiss hinsichtlich der Höhe der Temperatur gefunden werden müssen, wobei entweder die Kühlwirkung oder die Stofftransportwirkung des Gases im Vordergrund steht. Eine zu starke Kühlung kann dazu führen, dass dampfförmige Stoffe sich auf der Innenwand des Profils niederschlagen. Vorzugsweise liegt die Anfangstemperatur des Gases zwischen 10 °C und 80 °C.

In besonderen Fällen ist es vorteilhaft, das aus dem Profilhohlraum tretende Gas eventuell nach Konditionierung in den Kreislauf wiederaufzunehmen. Das kann der Fall sein, wenn z.B. Umweltforderungen erfüllt werden müssen oder wenn nicht Luft, sondern teureres Gas oder eine Gasmischung verwendet wird.

Das erfindungsgemässe Verfahren ist besonders geeignet zum Extrudieren eines Hohlprofils aus einem ABS-Kunststoff. Die ABS-Kunststoffe werden üblicherweise hergestellt durch Propfpolymerisation von ethylenisch ungesättigten Monomeren zum Beispiel Acrylnitril und Styrol in einem Gewichtsverhältnis 20: 80 zu 40: 80, auf einem Butadienkautschuk.

Thermoplastische Harze aus den ethylenisch ungesättigten Monomeren können dem Propfprodukt zugemischt sein.

Sowohl bei der Herstellung des Propfprodukts als bei der Herstellung des Harzes können die üblichen Polymerisationsverfahren angewandt werden.

Das erfindungsgemässe Verfahren ist mit Vorteil anzuwenden in dem Fall, dass wenigstens eine der den ABS-Kunststoff bildenden Komponenten mittels Emulsionpolymerisation hergestellt worden ist.

Vorzugsweise wird im ABS-Kunststoff ein Propfprodukt verwendet, das mittels Emulsionspolymerisation hergestellt worden ist.

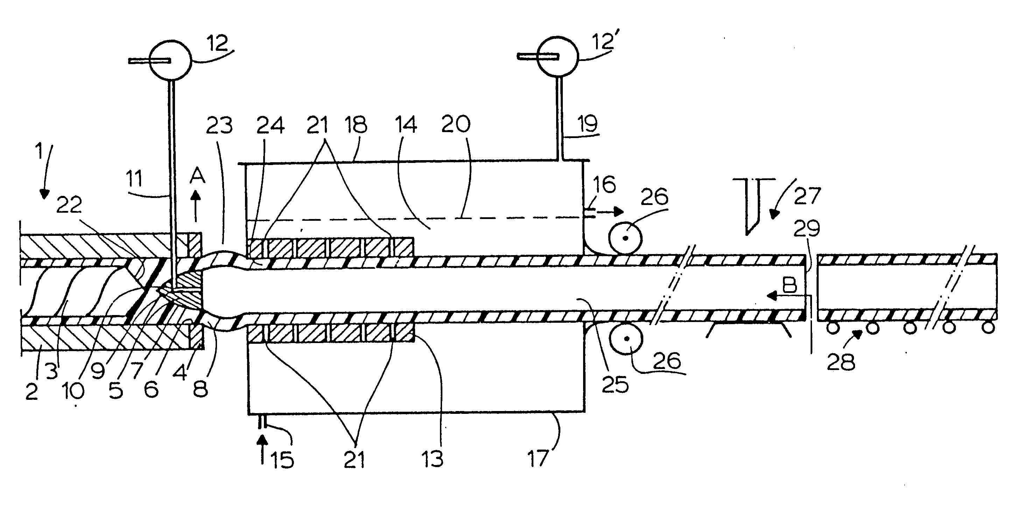

Die Erfindung wird nachstehend an einem Beispiel anhand einer in der Zeichnung dargestellten Anordnung einer Extrudieranlage zur Herstellung von Rohren aus einem Pfropfkopolymer von Acrylnitril und Styrol auf einem Butadiengummi, kurz ABS-Rohre genannt, erläutert.

In der Zeichnung wird eine Extrudiermaschine mit 1 bezeichnet, die einen Extrudermantel 2, eine Schnecke 3, einen Extrudierkopf 4 und einen Dorn 5 umfasst. Die Innenwand 6 des Extrudierkopfes und die Aussenwand 7 des Dorns 5 bilden einen ringförmigen Extrudierschlitz 8. Der Dorn besitzt eine axiale Bohrung 9, die an eine radiale Bohrung 10 anschliesst, die wiederum mit einem Kanal 11 in Verbindung steht, der nit einer Pumpe 12 verbunden ist, die Gas in Richtung des Pfeils A ansaugen kann. Zur Extrusionseinrichtung gehört weiterhin eine wassergekühlte Kalibrierbüchse 13, die in das Kühlwasserbad 14 eingetaucht ist, das Kühlwasser über eine Leitung 15 erhält und woraus über eine Leitung 16 Kühlwasser abgeführt werden kann. Die Wanne 17 für das Kühlwasserbad ist mit einem Deckel 18 abgeschlossen. Uber eine Leitung 19 kann über dem Flüssigkeitsspiegel mittels einer Vakuumpumpe 12' ein Vakuum erzeugt werden. Die Kalibrierbüchse 13 ist mit kleinen radialen Öffnungen 21 versehen. Die geschmolzene Kunststoffmasse 22 wird durch den ringförmigen Schlitz 8 nach aussen gepresst und durch den Raum 23 als rohrförmiges Profil 24 in die Kalibrierbüchse 13 geleitet. Das Vakuum oberhalb des Flüssigkeitsspiegels 20 sorgt dafür, dass die Aussenwand des Profils 24 gegen die gekühlte Innenwand der Kalibrierbüchse 13 gedrückt wird. Nachdem das Profil in der Kalibrierbüchse genügend abgekühlt ist, verfolgt es seinen Weg in das Wasserbad 14 und verlässt die Wanne 17 durch die auf dem Profil abgedichtete Öffnung 25. Eine schematisch dargestellte Abzugsvorrichtung 26 sorgt für den Transport des Profils vom Extruderkopf zur Abschneidevorrichtung 27, wonach die abgeschnittenen Profilstücke auf der Transporteinrichtung 28 zu einem Lagerplatz transportiert werden.

Während des Extrusionsprozesses wird über das freie Ende 29 des Profils Luft in Richtung des Pfeils B mittels der Pumpe 12 angesaugt. Die Richtung des Gasstroms ist also der Extrusionsrichtung entgegengesetzt. Die Geschwindigkeit des Gasstroms ist höher als die Extrusionsgeschwindigkeit.

## Beispiel

Zur Herstellung eines ABS-Rohres (Typ ABS: RONFALIN MT/L von DSM) mit einem Aussendurchmesser von 50 mm und einer Wandstärke von 1,8 mm wird in der beschriebenen Anlage eine Einschnecken-Maillefer-Extruder mit einem Innendurchmesser von 60 mm eingesetzt. Die Extrusionstemperatur beträgt 215 °C und die Extrusionsgeschwindigkeit 0,02 m/sec. Die Temperatur des Kühlbades beträgt 30 °C und die Länge des Kühlbades 1,5 m.

Stets werden Stücke von 4,00 m Länge abgeschnitten.

## Versuch I

Es wird extrudiert, ohne dass mittels der Pumpe 12 Luft angesaugt wird. Das hergestellte Rohr weist nach einiger Zeit Riefen suf der Innenwand auf, die durch Ablagerungen auf dem Dorn am Rand des Extrusionsschlitzes verursacht werden.

Das hergestellte Rohr hat einen spröden Charakter.

Die Schlagfestigkeit des Materials verringert sich nach einer Lagerung von ca. zwei Wochen auf ungefähr die Hälfte des Anfangswertes.

**Versuch II**

Nach der Reinigung des Dorns wird unter Einschaltung der Pumpe 12 erneut extrudiert, wodurch im Rohr ein Lufstrom in Richtung des Dorns mit einer Geschwindigkeit von 0,03 m/sec erzeugt wird. Die Temperatur der Luft beim Eintritt in das Profil beträgt 21,5 °C. Die Zeitspanne, die vergeht, bevor Riefen auf der Innenwand des Rohrs erscheinen, zeigt sich bedeutend länger als im vorhergehenden Versuch I. Auch weisen die Rohre nun einen zäheren Charakter auf, was einer zweckmässigeren Kühlung des Extrudats zugeschrieben wird. Die Schlagfestigkeit des Materials hat sich nach zwei Wochen Lagerung nicht nennenswert verringert. In der abgesaugten Luft werden durch Analyse u.a. Dihydroabeitinsäure und Dehydroabeitinsäure festgestellt.

Der Einfluss des erfindungsgemäss während der Extrusion aufrechterhaltenen Gasstroms auf die beobachteten Phänomene sowie ihr Zusammenhang ist nur teilweise erklärbar. Das Verhindern bruchfördernder Kratzer auf der Innenwand des Profils kommt deutlich der Schlagfestigkeit zugute. Dass die Schlagfestigkeit nach zwei Wochen Lagerung praktisch nicht abnimmt, kann hiermit jedoch kaum in Verbindung gebracht werden. Die Ursache hierfür kann in einer werbesserten Kühlung und/oder dem Verhindern von eventuellen Ablagerungen von Stoffen auf der Innenwand des Profils gesucht werden, die z.B. einen Spannungskorrosion verursachende Wirkung besitzen. Die Erfindung wird jedoch nicht durch theoretische Betrachtungen beschränkt.

Durch Anwendung des erfindungsgemässen Verfahrens können deutliche Vorteile in bezug auf den Prozess und das dadurch erzielte Produkt erreicht werden. So kann z.B. in einer kommerziellen Anlage nach Übergang auf das erfindungsgemässe Verfahren die Zeitspanne zwischen zwei Stillständen zum Reinigen des Dorns von zwei Tagen auf zwei Wochen verlängert werden. Die Produktionsgeschwindigkeit kann etwas erhöht werden, ohne dass die Temperatur des Dorns zu stark ansteigt, wodurch ein Zersetzen von Material an der Innenwand des Profils nicht auftritt.

**Patentansprüche**

1. Verfahren zum Extrudieren von Kunststoffhohlprofilen (24) mittels einer Extrudiermaschine, die einen im Extrudermundstück angeordneten Dorn (5) aufweist, wobei ein Gasstrom im Profilhohlraum in einer der Extrusionsrichtung entgegengesetzten Richtung (B) aufrechterhalten wird und über mindestens einen im Dorn angeordneten Kanal (9) abgeführt wird, dadurch gekennzeichnet, dass während des Extrudierens im gesamten Profilhohlraum des nicht abgschnitten Teils des extrudierten Profils (24) der Gasstrom aufrechterhalten wird, wobei Gas über das freie Ende (29) des Profils eingelassen wird.

2. Verfahren nach Anspruch 1, dadurch gekennzeichnet, dass der Gasstrom durch Absaugen über den Kanal (9) oder die Kanäle im Extrusionsdorn (9) aufrechterhalten wird.

**Claims**

1. A process of extruding hollow plastics sections (24) by means of an extruding machine having a mandrel (5) arranged in its extruder die ring, in which a flow of gas is maintained in the hollow section in a direction (B) opposite to the direction of extrusion, the gas being conducted away through at least one channel (9) arranged in the mandrel, characterised in that during extrusion, the gas flow is maintained in the entire cavity section of that part of the extruded section (24) which is not cut off, gas entering that part of the extruded section through its free end (29).

2. A process according to claim 1, wherein said flow of gas is maintained by aspirating through the channel (9) or channels in the extrusion mandrel (5).

**Revendications**

1. Procédé pour extruder des profilés creux en matière plastique (24) à l'aide d'une extrudeuse, qui comporte un poinçon (5) disposé dans l'embouchure de l'extrudeuse, et selon lequel un courant gazeux est maintenu dans la cavité du profilé suivant une direction (B) opposée à la direction d'extrusion et qui est évacué par l'intermédiaire d'au moins un canal (9) ménagé dans le poinçon, caractérisé en ce que pendant l'extrusion, le courant gazeux est maintenu dans l'ensemble de la cavité de la partie, non séparée par découpage, du profilé extrudé (24), le gaz étant introduit par l'intermédiaire de l'extrémité libre (29) du profilé.

2. Procédé selon la revendication 1, caractérisé en ce que le courant gazeux est maintenu par aspiration par l'intermédiaire du canal (9) ou des canaux situés dans le poinçon d'extrusion (5).